# EUROPÄISCHE PATENTSCHRIFT

(11) **EP 0 408 710 B1**
(45) Veröffentlichungstag und Bekanntmachung des Hinweises auf die Patenterteilung: **14.07.1993**
(21) Anmeldenummer: 90902223.8
(22) Anmeldetag: 31.01.1990
(51) Int. Cl.: E03C 1/04, F16L 37/14

(54) **SANITÄRBATTERIE FÜR AUFPUTZANBRINGUNG**
DOMESTIC PLUMBING INSTALLATION FOR SURFACE MOUNTING
INSTALLATION DE PLOMBERIE DOMESTIQUE APPARENTE

(30) Priorität: 31.01.1989 DE 3902799
(43) Veröffentlichungstag der Anmeldung: 23.01.1991
(73) Patentinhaber: IDEAL-STANDARD GMBH, D-53008 Bonn (DE)
(72) Erfinder: MÖNCH, Heinrich, D-5501 Kenn (DE)
(74) Vertreter: Gesthuysen, Hans Dieter, Dipl.-Ing.
(86) Internationale Anmeldenummer: EP9000172
(87) Internationale Veröffentlichungsnummer: WO9008858

(56) Entgegenhaltungen:
- EP-A- 0 213 423
- DE-A- 2 401 582
- DE-A- 2 915 391
- DE-A- 3 509 295
- DE-A- 3 726 436
- DE-U- 8 711 927
- US-A- 4 289 339

## Beschreibung

Sanitärbatterie für Aufputzanbringung, mit einem Ventilgehäuse mit mindestens einer ringförmigen Anschlußaufnahme und einem mit einem Anschlußende in die Anschlußaufnahme eingesetzten und in der Anschlußaufnahme gegen das Ventilgehäuse abgedichteten Wasserleitungsstück, wobei das Wasserleitungsstück mit seinem Anschlußende in die Anschlußaufnahme lediglich eingesteckt ist und am Anschlußende mindestens eine im wesentlichen senkrecht zur Steckrichtung, vorzugsweise etwa tangential verlaufende Riegelnut aufweist, im Ventilgehäuse mindestens eine im wesentlichen senkrecht zur Steckrichtung, vorzugsweise etwa tangential zur Anschlußaufnahme verlaufende, in die Anschlußaufnahme mündende Riegelbohrung vorgesehen ist, bei fluchtender Ausrichtung der Riegelnut mit der Riegelbohrung in die Riegelbohrung und weiter in die Riegelnut ein Riegelstift, vorzugsweise ein Tangentstift, eingesteckt ist und bei eingestecktem Riegelstift das Wasserleitungsstück mit dem Ventilgehäuse fest verbunden ist.

Sanitärbatterien für Aufputzanbringung sind in einer Vielzahl von Ausführungsformen als Badebatterien, Brausebatterien, Waschtischbatterien, Bidetbatterien usw. bekannt. Eine solche Sanitärbatterie hat normalerweise ein Ventilgehäuse, in der bei modernen Sanitärbatterien meist ein Einhebelmischsystem angeordnet ist. Zur Zufuhr von warmem und kaltem Wasser und zum Ableiten von Mischwasser hat ein solches Ventilgehäuse regelmäßig mehrere Anschlußaufnahmen, in die Anschlußenden von entsprechenden Wasserleitungsstücken eingesetzt werden können. Dies geschieht häufig dadurch, daß das Ventilgehäuse in der Anschlußaufnahme ein Innengewinde aufweist, in das das mit einem entsprechenden Außengewinde versehene Anschlußende des Wasserleitungsstückes eingeschraubt werden kann. Die Dichtung ist als auf Druck beanspruchte Ringdichtung in einer in der Sanitärinstallationstechnik bekannten Weise ausgeführt.

Die zuvor erläuterten Schraubverbindungen sind materialaufwendig, da die Wandstärke des Ventilgehäuses und der Wasserleitungsstücke die Anbringung der Gewinde erlauben muß, und kostenaufwendig, da entsprechende Gewinde zu schneiden sind.

Die zuvor aufgezeigte Problematik ist bereits erkannt und grundsätzlich einer Lösung zugeführt worden (EP-A-0 213 423), und zwar dadurch, daß auf eine Schraubverbindung verzichtet und anstatt dessen eine Stiftverbindung realisiert ist, die herstellungstechnisch wesentlich einfacher und kostengünstiger ist. Von dieser bekannten Sanitärbatterie mit einem in Riegelbohrung und Riegelnut eingesteckten Riegelstift geht die vorliegende Erfindung aus.

Bei der bekannten Sanitärbatterie mit Stiftverbindung ist der Riegelstift als Tangentstift ausgeführt und es können auch mehrere auf dem Umfang der Anschlußaufnahme verteilt angeordnete Riegelstifte eingesetzt werden. Der Riegelstift ist in seiner Riegelposition durch die Druckkraft eines elastischen Ringes gehalten. Er kann bedarfsweise wieder herausgezogen bzw. herausgestoßen werden. Das hat zwar den Vorteil, daß jedes Wasserleitungsstück vom Ventilgehäuse auch wieder abgenommen werden kann, jedoch den Nachteil, daß die so hergestellte Stiftverbindung relativ viel Spiel hat oder jedenfalls im Laufe der Zeit relativ viel Spiel auftritt.

Für sich bekannt ist eine Armatur, bei der es sich auch um eine Sanitärbatterie handeln kann (DE-A-2 401 582), bei der zunächst in einer Anschlußaufnahme der Armatur eine Riegelbohrung vorgebohrt wird, danach ein Anschlußende einer Leitung in die Anschlußaufnahme eingesteckt und darin justiert wird und dann der Riegelstift in die Riegelbohrung eingesteckt und tangential an der Wandung des Anschlußendes entlang weiter eingetrieben wird, so daß sich die Wandung des Anschlußendes in diesem Bereich verformt.

Der Erfindung liegt die Aufgabe zugrunde, die bekannte, eingangs erläuterte Sanitärbatterie so auszugestalten und weiterzubilden, daß die Verbindung des Wasserleitungsstücks mit dem Ventilgehäuse dauerhaft fest und möglichst spielfrei ist.

Die zuvor aufgezeigte Aufgabe ist dadurch gelöst, daß der vorzugsweise als Tangentstift ausgeführte Riegelstift als Lotstift ausgeführt ist und so das Anschlußende durch eine innenliegende Hartlötverbindung mit dem Ventilgehäuse fest verbunden ist.

Bei der erfindungsgemäßen Sanitärbatterie wird also der vorzugsweise als Tangentstift ausgeführte Riegelstift nur vorläufig zur mechanischen Verbindung des Anschlußendes des Wasserleitungsstücks mit dem Ventilgehäuse genutzt. Die eigentliche betriebsmäßige mechanische Verbindung wird durch nach Einstecken des Riegelstifts (Tangentstift) ausgeführtes Hartlöten realisiert. Das Lotmaterial für das Hartlöten wird durch den Riegelstift (Tangentstift) selbst herangeführt. Das Lotmaterial des Riegelstifts (Tangentstift) dringt in den Spalt zwischen dem Anschlußende und der Anschlußaufnahme ein und ergibt eine mechanisch fest, dauerhafte Verbindung. Diese Verbindung ist in den meisten Fällen auch sogleich hydraulisch dicht, jedenfalls kann man die verschiedenen Parameter ohne weiteres so aufeinander abstimmen, daß sie auch sogleich hydraulisch dicht ist. Auf ein gesondertes Dichtungselement kann in einem solchen Fall sogar verzichtet werden, was einen weiteren Vorteil darstellt.

Die bei der erfindungsgemäßen Sanitärbatterie hergestellte Verbindung ist dauerhaft fest und spielfrei und bei Realisierung der Abdichtung des Anschlußendes gegen das Ventilgehäuse durch die Hartlötverbindung selbst auch konstruktiv noch weit weniger aufwendig als die im Stand der Technik realisierte Stiftverbindung, die in jedem Fall ein gesondertes Dichtungselement erfordert.

Vorteilhafte Ausgestaltungen der Lehre sind Gegenstand der weiteren Unteransprüche.

Ein besonders zweckmäßiges Herstellungsverfahren für eine erfindungsgemäße Sanitärbatterie ist im Anspruch 6 beschrieben. Die aus dem Stand der Technik für sich bekannte Herstellungstechnik, bei der der Riegelstift als Schubkeil wirkt und unter Verformung der Wandung des Anschlußendes eingetrieben wird, ist bei der erfindungsgemäßen Sanitärbatterie in den meisten Fällen nicht einsetzbar. Der vorzugsweise als Tangentstift ausgeführte Riegelstift muß ja als Lotstift ausgeführt sein, was die Materialauswahl begrenzt. Hier empfiehlt sich das in Anspruch 6 beschriebene, gleichfalls sehr einfache Herstellungsverfahren.

Schließlich ist ein auf die Sanitärbatterie gemäß Anspruch 5 besonders abgestelltes, einfaches Herstellungsverfahren Gegenstand des Anspruchs 7.

Im folgenden wird die Erfindung anhand einer lediglich ein Ausführungsbeispiel darstellenden Zeichnung näher erläutert. In der Zeichnung zeigt
- Fig. 1: in einer Ansicht ein Ausführungsbeispiel einer erfindungsgemäßen Sanitärbatterie, allerdings dort nur das Ventilgehäuse und zwei Wasserleitungsstücke,
- Fig. 2: den Gegenstand aus Fig. 1 in einem Schnitt, ein Wasserleitungsstück lediglich strichpunktiert dargestellt,
- Fig. 3: in perspektivischer Ansicht ein Wasserleitungsstück für eine Sanitärbatterie gemäß Fig. 1 und
- Fig. 4: die Sanitärbatterie aus Fig. 1 in einer Ansicht von der Rückseite des Ventilgehäuses her.

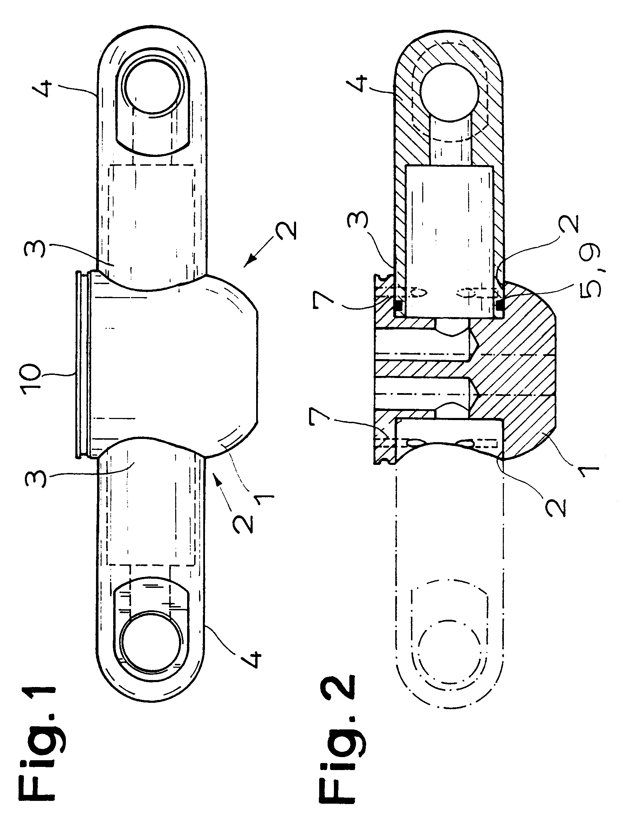

Die in Fig. 1 dargestellte Sanitärbatterie ist für Aufputzanbringung bestimmt und weist ein Ventilgehäuse 1 mit mindestens einer ringförmigen, vorzugsweise kreisringförmigen Anschlußaufnahme 2 auf. Im dargestellten Ausführungsbeispiel sind mehrere Anschlußaufnahmen 2 vorgesehen. In die Anschlußaufnahme 2 ist mit einem Anschlußende 3 ein Wasserleitungsstück 4 eingesetzt. Im dargestellten Ausführungsbeispiel sind zwei Wasserleitungsstücke 4 eingesetzt, nämlich zwei Wasserzulaufstücke. Wie in Fig. 2 nur bei einem Wasserleitungsstück 4 angedeutet ist, kann das Wasserleitungsstück 4 in der Anschlußaufnahme 2 durch eine Dichtung 5 gegen das Ventilgehäuse 1 abgedichtet sein. Es ist im übrigen mit dem Ventilgehäuse 1 fest verbunden.

Das Wasserleitungsstück 4 ist mit seinem Anschlußende 3 in die Anschlußaufnahme 2 lediglich eingesteckt. Es weist am Anschlußende 3 mindestens eine im wesentlichen senkrecht zur Steckrichtung, vorzugsweise etwa tangential verlaufende Riegelnut 6 auf. Im Ventilgehäuse 1 ist mindestens eine im wesentlichen senkrecht zur Steckrichtung, vorzugsweise etwa tangential zur Anschlußaufnahme 2 verlaufende, von oben und unten in die Anschlußaufnahme 2 mündende Riegelbohrung 7 vorgesehen. Bei fluchtender Ausrichtung der Riegelnut 6 mit der Riegelbohrung 7 ist in die Riegelbohrung 7 und weiter in die Riegelnut 6 ein Riegelstift einsteckbar. Dieser ist hier als Tangentstift 8 ausgeführt. Bei eingestecktem Tangentstift 8 ist das Wasserleitungsstück 4 mit dem Ventilgehäuse 1 fest verbunden.

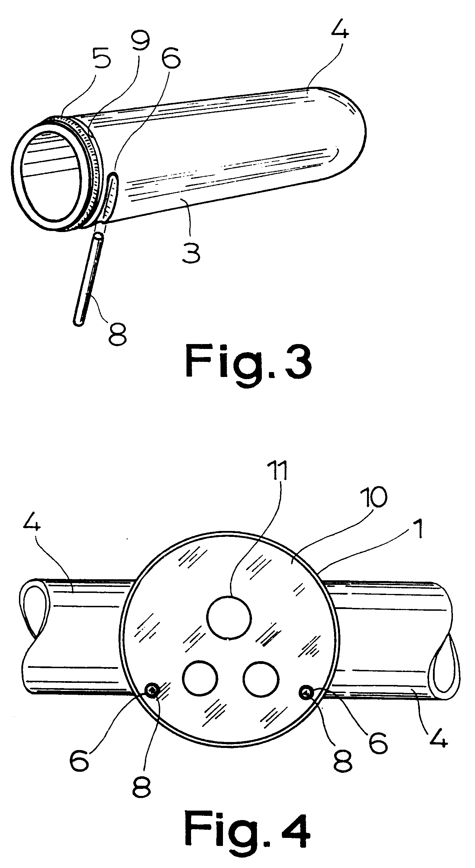

Fig. 3 zeigt in perspektivischer Darstellung das Anschlußende 3 des entsprechenden Wasserleitungsstückes 4 und hier besonders deutlich erkennbar die Riegelnut 6, die tangential und quer zur Steckrichtung verläuft. Dargestellt ist hier auch der Tangentstift 8. Durch seine Lage in der Riegelnut 6 verhindert der Tangentstift 8, daß das Anschlußende 3 des Wasserleitungsstücks 4 aus der in Fig. 3 nicht dargestellten Anschlußaufnahme 2 herausgezogen werden kann. Die Dichtung 5 dichtet dabei das Anschlußende 3 in der Anschlußaufnahme 2 strömungstechnisch ab. Ergänzend zeigt Fig. 1, wie nun dieses Anschlußende 3 in der Anschlußaufnahme 2 sitzt und in dieser durch den Tangentstift 8 fixiert ist.

Im übrigen ist darauf hinzuweisen, daß die Ausführungsform mit einem Tangentstift lediglich eine bevorzugte Ausführungsform ist, daß im übrigen aber auch Querstifte od. dgl. verwendet werden können. Im übrigen gilt auch, daß eine Verwendung mehrerer Riegelnuten, Riegelbohrungen und Tangentstifte je Anschlußaufnahme aus befestigungstechnischen Gründen zweckmäßig sein kann.

Hinsichtlich der Ausführung des Riegelstifts gibt es verschiedene Möglichkeiten. So gibt es Zylinderstifte, Kegelstifte, Kerbstifte usw. Besonders zweckmäßig ist die Ausführung als Kerbstift, durch die ein Herausgleiten aus der Riegelbohrung 7 und der Riegelnut 6 ohne weiteres verhinderbar ist.

Fig. 3 zeigt in Verbindung mit Fig. 2 für das dort rechts angeordnete Wasserleitungsstück 4, daß die Dichtung 5 als ein in eine umlaufende Dichtungsnut 9 am Anschlußende 3 eingelegter, an der Wandung der Anschlußaufnahme 2 abdichtend zur Anlage kommender Dichtungsring ausgeführt ist. Aus abdichtungstechnischen Gründen befindet sich die Dichtungsnut 9 dabei auf der dem freien Ende des Auslaßendes 3 zugewandten Seite der Riegelnut 6. Dadurch liegt die Riegelnut 6 außerhalb des strömungstechnisch abzudichtenden Bereichs im Ventilgehäuse 1.

Im allgemeinen Teil der Beschreibung ist schon ausgeführt worden, daß der vorzugsweise als Tangentstift 8 ausgeführte Riegelstift auch als Lötstift ausgeführt ist. Eine besondere Verbindungstechnik ist bei dem in Fig. 2 links dargestellten Wasserleitungsstück 4 verwirklicht. Der hier nicht eingezeichnete Tangentstift 8 ist als Lötstift ausgeführt. Er wird dabei zunächst wie zuvor erläutert eingesteckt, dann aber wird ein Hartlötvorgang durchgeführt, durch den dann unter Nutzung des Lotmaterials des Tangentstifts 8 eine innenliegende Hartlötverbindung zwischen dem Anschlußende 3 des Wasserleitungsstücks 4 und dem Ventilgehäuse 1 entsteht. Fig. 2 macht dabei links deutlich, daß wegen der so entstandenen Hartlötverbindung nicht nur eine mechanisch feste, sondern eine auch sogleich hydraulisch dichte Verbindung zum Ventilgehäuse hergestellt ist, so daß sogar auf eine weitere Abdichtung durch ein zusätzliches Dichtungselement verzichtet werden kann.

Fig. 4 macht eine weitere Ausgestaltung deutlich, die dadurch gekennzeichnet ist, daß das Ventilgehäuse 1 eine Anschlußfläche 10 mit weiteren Wasserdurchlaßbohrungen 11 aufweist und die Riegelbohrung 7 von der Anschlußfläche 10 ausgeht. Vorteilhaft ist es, daß die Riegelbohrung 7 hier parallel zu den Wasserdurchlaßbohrungen 11 verläuft. Auf diese Weise ist das offene Ende der Riegelbohrung 7 an einer im Einsatz abgedeckten Anschlußfläche 10 zu finden und es ist durch konstruktive Vorgabe möglich gemacht, daß die Riegelbohrung 7 gemeinsam mit den Wasserdurchlaßbohrungen 11 in einem Arbeitsgang eingebracht wird.

Zuvor schon ist allgemein darauf hingewiesen worden, daß mehrere Riegelnuten, Riegelbohrungen und Riegelstifte verwendet werden können. Besonders zweckmäßig dürfte es sein, daß je Wasserleitungsstück eine weitere Riegelnut bzw. Riegelbohrung auf der gegenüberliegenden Seite des Wasserleitungsstücks und der Anschlußaufnahme angeordnet und ein weiterer, vorzugsweise als Tangentstift ausgeführter Riegelstift vorgesehen ist. Diese im wesentlichen parallel zueinander angeordneten Teile der Sanitärbatterie erlauben eine hohe Festigkeit der Verbindung bei kaum größerem Verbindungsaufwand.

Herstellungstechnisch läßt sich eine beschriebene Sanitärbatterie dadurch besonders zweckmäßig realisieren, daß zunächst die Riegelbohrung vorgebohrt wird, danach das Anschlußende des Wasserleitungsstücks in die Anschlußaufnahme eingesteckt und darin justiert wird, dann die Riegelbohrung in das Ventilgehäuse gebohrt und gleichzeitig auch die Riegelnut in das Anschlußende gebohrt wird und schließlich der Riegelstift eingesteckt wird. Mit dieser Verfahrenstechnik wird je Wasserleitungsstück der Arbeitsgang des Einbringens der Riegelnut eingespart.

Schließlich ist zuvor schon darauf hingewiesen worden, daß die in der Zeichnung dargestellte Anordnung der Riegelbohrung 7 dazu führt, daß verfahrenstechnisch die Riegelbohrung 7 gleichzeitig mit den Wasserdurchlaßbohrungen 11 gebohrt werden kann. Diese vorteilhafte Verfahrensmaßnahme ist unabhängig von dem zuvor erläuterten, vorteilhaften Herstellungsverfahren insgesamt.

## Patentansprüche

1. Sanitärbatterie für Aufputzanbringung, mit einem Ventilgehäuse (1) mit mindestens einer ringförmigen Anschlußaufnahme (2) und einem mit einem Anschlußende (3) in die Anschlußaufnahme (2) eingesetzten und in der Anschlußaufnahme (3) gegen das Ventilgehäuse (1) abgedichteten Wasserleitungsstück (4), wobei das Wasserleitungsstück (4) mit seinem Anschlußende (3) in die Anschlußaufnahme (2) lediglich eingesteckt ist und am Anschlußende (3) mindestens eine im wesentlichen senkrecht zur Steckrichtung, vorzugsweise etwa tangential verlaufende Riegelnut (6) aufweist, im Ventilgehäuse (1) mindestens eine im wesentlichen senkrecht zur Steckrichtung, vorzugsweise etwa tangential zur Anschlußaufnahme (2) verlaufende, in die Anschlußaufnahme (2) mündende Riegelbohrung (7) vorgesehen ist, bei fluchtender Ausrichtung der Riegelnut (6) mit der Riegelbohrung (7) in die Riegelbohrung (7) und weiter in die Riegelnut (6) ein Riegelstift (8), vorzugsweise ein Tangentstift, eingesteckt ist und bei eingestecktem Riegelstift (8) das Wasserleitungsstück (4) mit dem Ventilgehäuse (1) fest verbunden ist, **dadurch gekennzeichnet,** daß der vorzugsweise als Tangentstift ausgeführte Riegelstift (8) als Lotstift ausgeführt ist und so das Anschlußende (3) durch eine innenliegende Hartlötverbindung mit dem Ventilgehäuse (1) fest verbunden ist.

2. Sanitärbatterie nach Anspruch 1, dadurch gekennzeichnet, daß eine weitere Riegelnut bzw. Riegelbohrung auf der gegenüberliegenden Seite des Wasserleitungsstücks und der Anschlußaufnahme angeordnet und ein weiterer, vorzugsweise als Tangentstift ausgeführter Riegelstift vorgesehen ist.

3. Sanitärbatterie nach Anspruch 1 oder 2, dadurch gekennzeichnet, daß die Abdichtung des Anschlußendes (3) gegen das Ventilgehäuse (1) durch die Hartlötverbindung selbst realisiert ist.

4. Sanitärbatterie nach einem der Ansprüche 1 bis 3, dadurch gekennzeichnet, daß der vorzugsweise als Tangentstift ausgeführte Riegelstift (8) als Kerbstift ausgeführt ist.

5. Sanitärbatterie nach einem der Ansprüche 1 bis 4, dadurch gekennzeichnet, daß das Ventilgehäuse (1) eine Anschlußfläche (10) mit weiteren Wasserdurchlaßbohrungen (11) aufweist und daß die Riegelbohrung (7) von der Anschlußfläche (10) ausgeht und, vorzugsweise, parallel zu den Wasserdurchlaßbohrungen (11) verläuft.

6. Verfahren zur Herstellung einer Sanitärbatterie nach einem der Ansprüche 1 bis 5, dadurch gekennzeichnet, daß zunächst die Riegelbohrung vorgebohrt wird, daß danach das Anschlußende des Wasserleitungsstücks in die Anschlußaufnahme eingesteckt und darin justiert wird, daß dann die Riegelbohrung in das Ventilgehäuse gebohrt und gleichzeitig auch die Riegelnut in das Anschlußende gebohrt wird und daß schließlich das Anschlußende des Wasserleitungsstücks mittels eines in die Riegelbohrung und die Riegelnut eingesteckten, als Lotstift ausgeführten Riegelstifts durch eine innenliegende Hartlötverbindung mit dem Ventilgehäuse fest verbunden wird.

7. Verfahren zur Herstellung einer Sanitärbatterie nach Anspruch 5, dadurch gekennzeichnet, daß die Riegelnut gleichzeitig mit den Wasserdurchlaßbohrungen gebohrt wird und daß das Anschlußende des Wasserleitungsstücks mittels eines in die Riegelbohrung und die Riegelnut eingesteckten, als Lotstift ausgeführten Riegelstifts durch eine innenliegende Hartlötverbindung mit dem Ventilgehäuse fest verbunden wird.

## Claims

1. A sanitary tap installation for surface mounting, with a valve housing (1) with at least one ring-like connection receiver (2) and a water pipe section (4) with a connection end (3) which is inserted in the connection receiver (2) and which is sealed against the valve housing (1) in the connection receiver (2), wherein the connection end (3) of the water pipe section (4) is simply inserted in the connection receiver (2) and has at least one locking notch (6) running substantially perpendicularly, preferably approximately tangentially, to the direction of insertion, at least one locking hole (7) is provided in the valve housing (1), which locking hole opens into the connection receiver (2) and runs substantially perpendicularly to the direction of insertion, preferably approximately tangentially to the connection receiver (2), when the locking notch (6) is accurately aligned with the locking hole (7) a locking pin (8), preferably a tangential pin, is inserted in the locking hole (7) and further into the locking notch (6), and with the locking pin (8) inserted the water pipe section (4) is firmly attached to the valve housing (1), characterised in that the locking pin (8), which is preferably designed as a tangential pin, is constructed as a solder pin, and thus the connection end (3) is firmly attached to the valve housing (1) by means of an internal hard-soldered joint.

2. A sanitary tap installation according to claim 1, characterised in that a further locking notch or locking hole is disposed on the opposite side of the water pipe section and of the connection receiver, and a further locking pin is provided, which is preferably designed as a tangential pin.

3. A sanitary tap installation according to claims 1 or 2, characterised in that the sealing of the connection end (3) against the valve housing (1) is effected by the hard-soldered joint itself.

4. A sanitary tap installation according to any one of claims 1 to 3, characterised in that the locking pin (8), which is preferably designed as a tangential pin, is constructed as a grooved pin.

5. A sanitary tap installation according to any one of claims 1 to 4, characterised in that the valve housing (1) has a connection face (10) with further water inlet holes (11) and that the locking hole (7) starts from the connection face (10) and preferably runs parallel to the water inlet holes (11).

6. A process for manufacturing a sanitary tap installation according to any one of claims 1 to 5, characterised in that the locking hole is first pre-drilled, that the connection end of the water pipe section is then inserted in the connection receiver and adjusted therein, that the locking hole is then drilled in the valve housing and at the same time the locking notch is drilled in the connection end, and that finally the connection end of the water pipe section is firmly attached to the valve housing by an internal hard-soldered joint, by means of a locking pin constructed as a solder pin, and is inserted in the locking hole and the locking notch.

7. A process for manufacturing a sanitary tap installation according to claim 6, characterised in that the locking notch is drilled at the same time as the water inlet holes, and that the connection end of the water pipe section is firmly attached to the valve housing by an internal hard-soldered joint, by means of a locking pin constructed as a solder pin, and is inserted in the locking hole and the locking notch.

## Revendications

1. Robinet sanitaire se montant de manière apparente, comportant un corps (1) pourvu d'au moins un logement de raccordement de forme annulaire (2) et une tubulure d'eau (4) ayant une extrémité de raccordement (3) emboîtée dans le logement de raccordement (2) et montée ainsi dans ce logement de manière étanche par rapport au corps (1) du robinet, l'extrémité de raccordement (3) de la tubulure d'eau (4) étant simplement emboîtée dans le logement de raccordement (2), et au moins une gorge de verrouillage (6) étant prévue sur l'extrémité de raccordement (3), cette gorge étant sensiblement perpendiculaire à l'axe d'emboîtement et, de préférence, disposée de manière sensiblement tangentielle, tandis que dans le corps (1) du robinet est prévu au moins un perçage de verrouillage (7) sensiblement perpendiculaire à l'axe d'emboîtement et de préférence sensiblement tangentiel par rapport au logement de raccordement (2) dans lequel ce perçage (7) débouche, la mise en coïncidence de la gorge de verrouillage (6) et du perçage de verrouillage (7) permettant d'enfoncer dans le trou de verrouillage (7) et ensuite dans la gorge de verrouillage (6) une goupille de verrouillage (8), constituée de préférence par une goupille tangentielle, qui assure en position enfoncée la fixation solide de la tubulure d'eau (4) sur le corps du robinet (1), caractérisé en ce que la goupille de verrouillage (8), de préférence réalisée sous la forme d'une goupille tangentielle, est constituée par une goupille brasée, l'extrémité de raccordement (3) étant ainsi fixée solidement au corps du robinet (1) par une liaison interne brasée en métal dur.

2. Robinet sanitaire selon la revendication 1, caractérisé en ce qu'il comporte au surplus une autre gorge de verrouillage associée à un autre trou de verrouillage sur le côté opposé de la tubulure d'eau et du logement de raccordement, et une autre goupille de verrouillage, constituée de préférence par une goupille tangentielle.

3. Robinet sanitaire selon la revendication 1 ou 2, caractérisé en ce que l'étanchéité du montage de l'extrémité de raccordement (3) par rapport au corps du robinet (1) est assurée par la liaison brasée en métal dur.

4. Robinet sanitaire selon l'une des revendications 1 à 3, caractérisé en ce que la goupille de verrouillage (8), de préférence tangentielle, est constituée par une goupille cannelée.

5. Robinet sanitaire selon l'une des revendications 1 à 4, caractérisé en ce que le corps (1) du robinet présente une face de raccordement (10) pourvue de trous complémentaires (11) pour le passage de l'eau, et en ce que le perçage de verrouillage (7) est réalisé à partir de la face de raccordement (10), en étant orienté de préférence parallèlement aux trous de passage (11) prévus pour l'eau.

6. Procédé pour fabriquer un robinet sanitaire selon l'une des revendications 1 à 5, caractérisé en ce qu'on perce d'abord un avant-trou à l'endroit du trou de verrouillage, pour emboîter ensuite l'extrémité de raccordement de la tubulure d'eau dans le logement de raccordement, dans lequel on ajuste alors cette extrémité, en ce qu'on effectue alors le perçage du trou de verrouillage dans le boîtier du robinet, en usinant du même coup la gorge de verrouillage sur l'extrémité de raccordement, et en ce qu'on assure enfin la fixation solide de l'extrémité de raccordement de la tubulure d'eau au boîtier du robinet, au moyen d'une goupille de verrouillage enfoncée dans le trou de verrouillage et dans la gorge de verrouillage, et constituée par une goupille brasée qui permet d'obtenir une liaison brasée interne solide en métal dur entre la tubulure et le corps du robinet.

7. Procédé pour fabriquer un robinet sanitaire selon la revendication 5, caractérisé en ce que l'on effectue en même temps le perçage du trou de verrouillage et des trous de passage de l'eau, et en ce qu'on assure la fixation de l'extrémité de raccordement de la tubulure d'eau dans le corps du robinet au moyen d'une goupille de verrouillage enfoncée dans le trou de verrouillage et la gorge de verrouillage, et constituée par une goupille brasée qui permet d'obtenir une liaison brasée interne solide en métal dur, entre la tubulure et le corps du robinet.
